# EUROPEAN PATENT APPLICATION

(11) **EP 4 621 449 A1**
(43) Date of publication of application: **24.09.2025**
(21) Application number: 23891474.1
(22) Date of filing: 10.11.2023
(51) Int. Cl.: G02B 3/00, B05C 3/09, B05C 9/14, B05C 13/02, B05D 1/18, B05D 3/00, B05D 3/02, B05D 7/00, G02B 1/10

(54) **HOLDING JIG AND METHOD FOR MANUFACTURING OPTICAL ELEMENT**

(30) Priority: 15.11.2022 JP 2022182823
(71) Applicant: Hoya Lens Thailand Ltd., Pathumthani 12130 (TH)
(72) Inventor: ANNAKA Satoshi, Tokyo 160-8347 (JP); ITOU Mitsuhide, Tokyo 160-8347 (JP)
(74) Representative: Betten & Resch
(86) International application number: PCT/JP2023/040538
(87) International publication number: WO 2024/106325

(57) **Abstract**

There are provided a holding jig 1 and a related technique thereof, which is a holding jig 1 for holding an optical element, including: a base; a plurality of holding mechanisms that hold a peripheral edge of the optical element; a biasing member that biases a first holding mechanism 15 among the plurality of holding mechanisms so that the first holding mechanism 15 rotates toward a side surface of the optical element to be held; and a lever 90 that can be rotated in a direction parallel to a plane including a rotation direction of the first holding mechanism 15, wherein the lever 90 is rotated to fix the first holding mechanism 15, thereby reducing a biasing force added on the optical element by the biasing member.

## Description

### Background

### Technical Field

The present invention relates to a holding jig and a method for manufacturing an optical element.

### Description of related art

A method for depositing a film by immersing a lens substrate L in a coating liquid for deposition, and drying the coating liquid applied to a surface of the lens substrate L is widely used as a method for depositing a hard coat film, an anti-reflection film, etc., on a substrate of a spectacle lens. When immersing the lens substrate L in such a coating liquid, the lens substrate L is immersed in the coating liquid while an outer edge of the lens substrate L is held by a lens holder. Then, after the lens substrate L is pulled up from the coating liquid, the lens substrate L is subjected to a heat treatment while being held by the lens holder, to dry the coating liquid or to anneal the coating film.

As a lens holder for holding the lens substrate L, for example, Patent document 1 discloses a holding jig, which is a holding jig for holding an optical element, including: a base; at least three holding portions that hold a peripheral edge of an optical element; a first arm to which a first holding portion of the at least three holding portions is attached and which is provided on the base so as to be rotatable around an axis; a biasing member that biases the first arm in a first rotation direction so that the first holding portion faces the optical element; and a fixing mechanism configured to fix a rotation of the first arm. Unless otherwise specified in this specification, the contents described in Patent document 1 can be cited.

### Prior art document

### Patent document

[Patent Document 1] JP 2022-141091 A

### Summary of the invention

### Problem to be solved by the invention

In Patent document 1, a wing bolt is exemplified as a fixing mechanism configured to fix the rotation of a first arm. Patent document 1 described that the wing bolt includes a cylindrical threaded portion having a thread formed on its outer circumferential surface, and a pair of operating wings connected to the threaded portion. In this regard, the present inventors have obtained the following findings.

A deposition treatment including immersion is performed in a state where the optical element is held by the holding jig described in Patent document 1. In this case, it is inefficient to perform the deposition treatment including immersion for only one of the holding jigs. It is efficient to perform the deposition treatment collectively for a plurality of holding jigs that hold the optical element.

On the other hand, when the holding jig described in Patent document 1 is hung from a hanging member and the plurality of holding jigs are arranged in the left-right direction on the paper surface of FIG. 3 of Patent document 1, even when an operator tries to grab the operating feather of the wing bolt, his/her hand will hit the adjacent holding jig, leaving no space for operation. In order to ensure sufficient space for operation, there is a need to ensure a large space between the holding jigs. This reduces the number of holding jigs that can be used for collective deposition treatment, resulting in poor work efficiency.

Further, even when using only one holding jig as described in Patent document 1, the operator is required to grab the operating wing of the wing bolt. Simplification of this operation leads to improved efficiency in the operation of fixing the rotation of the first arm, eventually improving operational efficiency in the deposition treatment.

An object of one example of the present invention is to provide a technique for improving the work efficiency of the deposition treatment.

### Means for solving the problem

According to a first aspect of the present invention, there is provided a holding jig, which is a holding jig for holding an optical element, including:
a base;
a plurality of holding mechanisms that hold a peripheral edge of the optical element;
a biasing member that biases a first holding mechanism among the plurality of holding mechanisms so that the first holding mechanism rotates toward a side surface of the optical element to be held; and
a lever that can be rotated in a direction parallel to a plane including a rotation direction of the first holding mechanism,
wherein the lever is rotated to fix the first holding mechanism, thereby reducing a biasing force added on the optical element by the biasing member.

According to a second aspect of the present invention, there is provided the holding jig of the first aspect, further including:
a screw member inserted through at least the base, the first holding mechanism, and the lever, and that is screwed into at least any of the lever, the base, and the first holding mechanism,
wherein by rotating the lever, the first holding mechanism moves relative to the screw member in either direction in an axial rotation direction, and is pressed against a member adjacent to the holding mechanism and fixed.

According to a third aspect of the present invention, there is provided the holding jig of the second aspect,
wherein when at least the first holding mechanism, the biasing member, the lever and the screw member are defined as one set, the set is provided as multiple sets arranged in the axial rotation direction.

According to a fourth aspect of the present invention, there is provided the holding jig of the first aspect,
wherein the plurality of holding mechanisms include:
a second holding mechanism placed to face the first holding mechanism with the optical element to be held therebetween; and
a third holding mechanism that supports the optical element to be held from below.

According to a fifth aspect of the present invention, there is provided the holding jig of the fourth aspect,
wherein the second holding mechanism is fixed to the base.

According to a sixth aspect of the present invention, there is provided the holding jig of the fourth aspect,
wherein the third holding mechanism is a member fixed to the base and elongated in the axial rotation direction, and is an elongated member provided with a plurality of grooves for clamping the optical element to be held in the axial rotation direction.

According to a seventh aspect of the present invention, there is provided the holding jig of the sixth aspect,
wherein the third holding mechanism is a plurality of the elongated members arranged in a horizontal direction within a plane including the rotation direction, and a center position of the groove in the axial rotation direction is the same for each elongated member.

According to an eighth aspect of the present invention, there is provided the holding jig of the sixth aspect,
wherein the elongated member is a plate-like member whose shape when viewed from a horizontal direction in a plane including the rotation direction is at least one of a bent line or a curve.

According to a nineth aspect of the present invention, there is provided the holding jig of the second aspect,
wherein a head of the screw member and the lever are located at positions sandwiching the first holding mechanism, and by rotating the lever, the first holding mechanism moves relative to the screw member in either direction in the axial rotation direction, and a pressing destination when the first holding mechanism is pressed, is the head of the screw member, or a member inserted through the screw member and is placed on either side of the first holding mechanism.

According to a tenth aspect of the present invention, there is provided the holding jig of the nineth aspect,
wherein the biasing member is a coil spring,
the screw member is further inserted through the biasing member, and the head of the screw member, the first holding mechanism, the biasing member, the base, and the lever are arranged in this order in the axial rotation direction.

According to an eleventh aspect of the present invention, there is provided the holding jig of the tenth aspect, further including:
a spacer between the first holding mechanism and the base,
wherein the spacer has a size that can be accommodated in a spiral portion of the coil spring, and the spacer comes into direct contact with the first holding mechanism when the lever is rotated, to thereby fix the first holding mechanism.

According to a twelfth aspect of the present invention, there is provided the holding jig of the second aspect,
wherein the lever is rotated in the same direction as a direction in which the first holding mechanism rotates toward a side surface of the optical element, to thereby fix the first holding mechanism, and
the lever is rotated in a direction opposite to a direction in which the first holding mechanism rotates toward the side surface of the optical element, to thereby fix the first holding mechanism while rotating the first holding mechanism in the opposite direction.

According to a thirteenth aspect of the present invention, there is provided a method for manufacturing an optical element, for depositing a film on an optical element while holding the optical element using the holding jig according to any one of the first to twelfth aspects, the method including:
an optical element holding step of placing the optical element in the holding jig, and holding a peripheral edge of the optical element with the plurality of holding mechanisms while biasing the first holding mechanism so as to rotate toward a side surface of the optical element;
a first holding mechanism fixing step of fixing the first holding mechanism by rotating the lever after the optical element holding step;
an immersion step of immersing the optical element together with the holding jig in a coating liquid after the first holding mechanism fixing step;
a pulling up step of pulling up the optical element together with the holding jig from the coating liquid; and
a curing step of heating and curing the coating liquid applied to the optical element.

### Advantage of the invention

According to one example of the present invention, work efficiency of a deposition treatment is improved.

### Brief description of the drawings

FIG. 1 is a schematic front view of a holding jig according to one embodiment of the present invention, as viewed from the -Z direction to the +Z direction.
FIG. 2 is a schematic exploded side view of each member inserted through a screw member of a holding jig according to one embodiment of the present invention, as viewed from the +X direction to the -X direction.
FIG. 3 is a schematic side view of a state where two sets of holding jig parts are arranged on one connecting member (part of a base) in FIG. 2, as viewed from the +X direction to the -X direction.
FIG. 4 is a schematic partial side view of the rotation of the lever of the holding jig according to one embodiment of the present invention, as viewed from the -Z direction to the +Z direction. A bent claw (type 2) is hidden behind a bent claw (type 1) in the drawing.
FIG. 5 is a flow chart showing a method for manufacturing a spectacle lens using a holding jig according to one embodiment of the present invention.

### Detailed description of the invention

One embodiment of the present invention will be described below. The following description based on the drawings is merely illustrative, and the present invention is not limited to the illustrated embodiment.

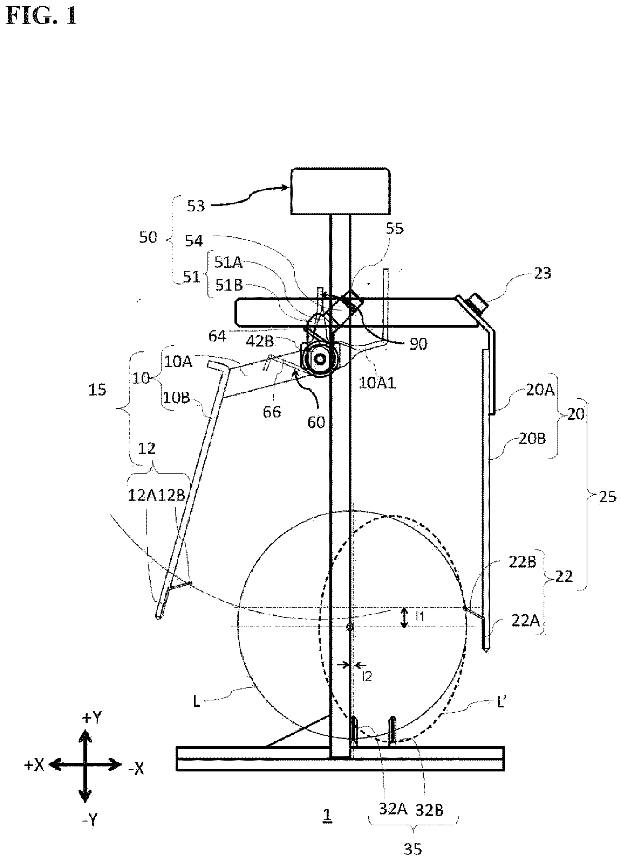

In this specification, when the first holding mechanism 15 rotates toward the side surface of the optical element, an axial rotation direction of the first holding mechanism 15 among the plurality of holding mechanisms is defined as the Z direction. The two-dot chain line in FIG. 1 shows a rotational trajectory of a first arm 10.

A plane including the rotation direction of first arm 10 is defined as an XY plane, a horizontal direction is defined as the X direction, and a vertical direction (top-bottom direction) is defined as the Y direction.

Of the horizontal directions, the direction away from the second arm 20 as viewed from the placed optical element is defined as the +X direction, and the direction approaching the second arm 20 is defined as the -X direction.

An upward direction is defined as the +Y direction, and a downward direction is defined as the -Y direction.

Of the Z directions, the direction closer to a lever 90 is defined as the +Z direction, and the direction closer to a head 42B of a screw member (eg, bolt 42) is defined as the -Z direction. In FIG. 1, the direction from the plane of the paper toward the back side of the paper is the +Z direction, and the direction from the plane of the paper toward the front side of the paper is the -Z direction.

**In** this specification, "...to..." indicates a given value or more and a given value or less.

### <Optical element>

A holding jig 1 according to one embodiment of the present invention is used to hold an optical element when a functional film is formed on the surface of the optical element by a coating treatment by immersing the optical element in a treatment solution, as described later. An example of the optical element is a lens substrate L used for a spectacle lens. According to one embodiment of the present invention, the optical element is the lens substrate L. However, the optical element may be a lens placed in an imaging device such as a camera other than the lens substrate L.

### <Holding jig 1>

FIG. 1 is a schematic front view of a holding jig 1 according to one embodiment of the present invention, as viewed from the -Z direction to the +Z direction.

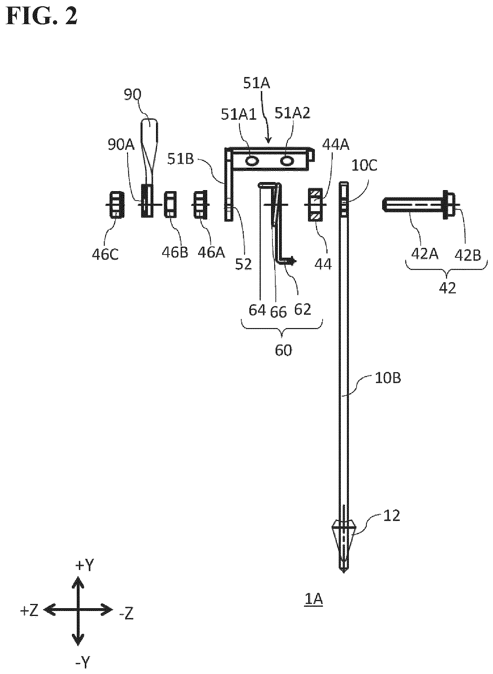

FIG. 2 is a schematic exploded side view of each member inserted through a screw member of the holding jig 1 according to one embodiment of the present invention, as viewed from the +X direction to the -X direction.

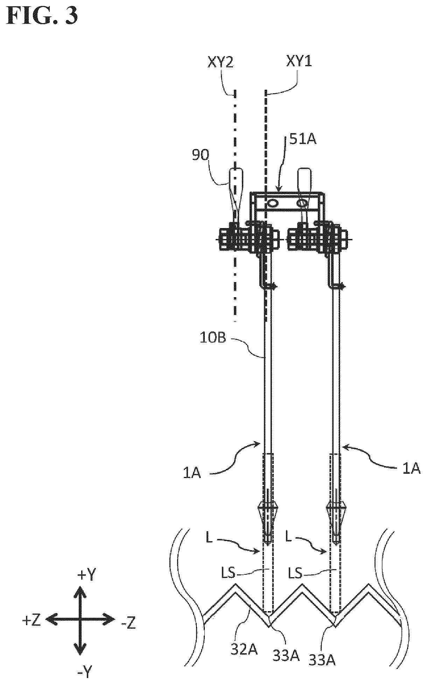

FIG. 3 is a schematic side view of two sets of holding jig parts 1A arranged on one connecting member 51 (part of the base 50) in FIG. 2, as viewed from the +X direction to the -X direction.

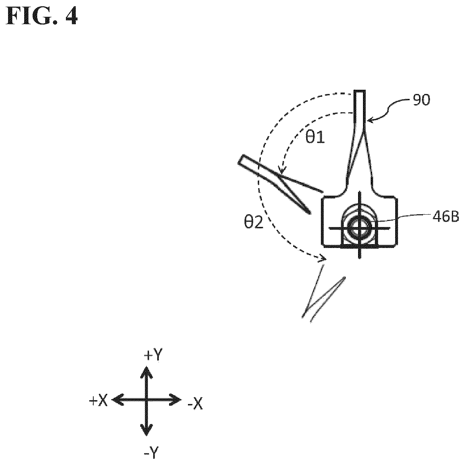

FIG. 4 is a schematic partial side view illustrating a rotation manner of a lever 90 of the holding jig 1 according to one embodiment of the present invention, as viewed from the -Z direction to the +Z direction.

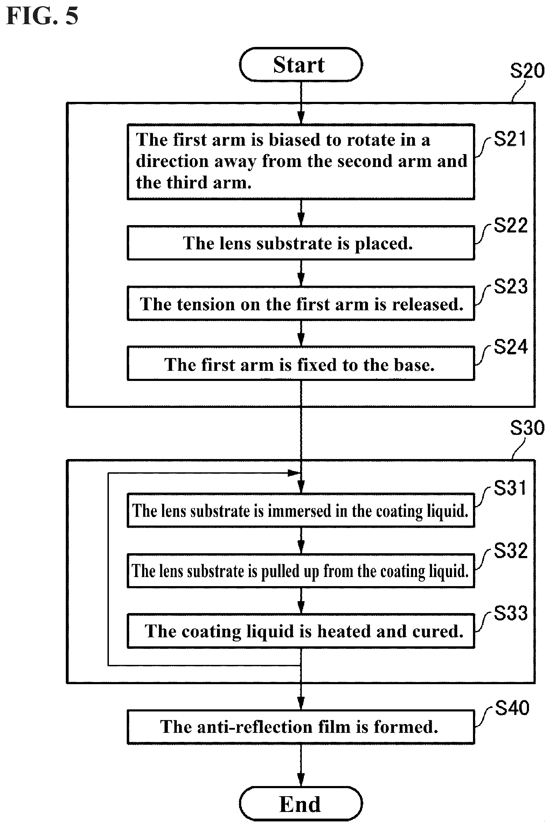

FIG. 5 is a flow chart showing a method for manufacturing a spectacle lens using the holding jig 1 according to one embodiment of the present invention.

The configuration of the holding jig 1 according to one embodiment of the present invention is as follows.

"A holding jig, which is a holding jig 1 for holding an optical element, including:
a base;
a plurality of holding mechanisms that hold a peripheral edge of the optical element;
a biasing member that biases a first holding mechanism 15 among the plurality of holding mechanisms so that the first holding mechanism 15 rotates toward a side surface of the optical element to be held; and
a lever 90 that can be rotated in a direction parallel to a plane including a rotation direction of the first holding mechanism 15,
wherein the lever 90 is rotated to fix the first holding mechanism 15, thereby reducing a biasing force added on the optical element by the biasing member.

In FIG. 3, the plane including the rotation direction of the first holding mechanism 15 (specifically, the first arm 10) is indicated by symbol XY1 (dotted line), and a plane parallel to the plane including the rotation direction of the first holding mechanism 15 and including the rotation direction of the lever 90 is indicated by symbol XY2 (dotted line), and according to one embodiment of the present invention, both planes are XY planes.

The holding jig 1 described in Patent document 1, which employs a wing bolt, requires space in the Z direction for operation of the holding jig 1. On the other hand, the holding jig 1 according to one embodiment of the present invention employs the lever 90 as the fixing mechanism to fix the first holding mechanism 15. When the lever 90 can be rotated in a direction within a plane parallel to a plane including the rotation direction of the first holding mechanism 15, an operator can simply reach out from the +X direction of the holding jig 1 (or within the XY plane, same below) to operate the lever 90. Further, the operator does not need to point his/her whole hand toward the lever 90, but can operate the lever 90 with just one finger, thereby improving work efficiency.

As a result, there is no longer a need to ensure a large space between the holding jigs 1 as in the case of employing the wing bolt, and there is also no need to reduce the number of holding jigs 1 that can be used for collective deposition treatment, thereby improving work efficiency.

Then, by rotating the lever 90 after the lens substrate L is attached, the first holding mechanism moves relative to the screw member and comes into contact with (is pressed against) an adjacent member, thereby being held in that position. Thereby, the biasing force of a spring added on the first holding mechanism is reduced or disappears, and the biasing force or pressing force added on the lens substrate L becomes substantially zero. Specifically, the lens substrate L is held in a state where substantially no biasing force is added on the lens substrate L. The term "substantially" will be described in detail later.

Hereinafter, the detail of the configuration of the holding jig 1 according to one embodiment of the present invention (preferable example or modified example) will be described.

The holding jig 1 according to one embodiment of the present invention mainly comprises the following configuration.

*Base 50 (including a connecting member 51) *First arm 10 constituting the first holding mechanism 15, and a first claw 12 which is a first holding portion that abuts against the optical element *Second arm 20 constituting a second holding mechanism 25, and second claw 22 which is a second holding portion that abuts against the optical element *Two rows of bent claws 32A, 32B (third claws (type 1, type 2)) which are third holding portions constituting a third holding mechanism 35 *Coil spring 60 as a biasing member *A lever 90 * A bolt 42 (or screws, or more broadly speaking, screw-fitting member) inserted through at least the base 50, the first holding mechanism 15, and the lever 90 and is screwed into at least one of the lever 90, the base 50, and the first holding mechanism 15.

Unless otherwise specified, each member constituting the holding jig 1 is composed of a heat-resistant metal such as stainless steel.

The base 50 is a portion that holds the first arm 10, the second arm 20, and the two rows of bent claws 32A, 32B, and allows the holding jig 1 to be disposed on a floor. A part of the base becomes a connecting member 51. When at least the first holding mechanism 15, the coil spring 60 that is the biasing member, the lever 90, and the bolt 42 that is the screw member are regarded as one set of the holding jig parts 1A, the connecting member 51 is a member for simultaneously connecting two sets of the holding jig parts 1A arranged in the Z direction to the connecting member 51. The portion of the base 50 other than the connecting member 51 is also referred to as a base body 53.

The connecting member 51 has a base connecting flat plate 51A which is a surface resulting from inclination of an upper part of the surface parallel to the YZ plane in the +X direction and is elongated in the Z direction, and has a mating flat plate 51B which is a flat plate provided at the end of the above flat plate on the +Z direction side and is parallel to the XY plane.

The base connecting flat plate 51A has two screw holes 51A1 and 51A2 arranged side by side in the Z direction. Similarly to the base connecting flat plate 51A, the screw holes are also provided on the surface of the base 53 inclined in the +X direction, and connecting screws are threaded through these screw holes. Thereby, the connecting member 51 is fixed to the base body 53, and eventually the holding jig part 1A attached by the connecting member 51 is attached to the base body 53. There is no limitation in the manner of the attachment. For example, as illustrated in FIG. 1, the base body 53 and the base connecting plate 51A may be connected by a bolt 55 via a square rod 54.

The mating plate 51B may also be provided at the end of the base connecting plate 51A on the -Z direction side. Then, a copy of another set of holding jig parts 1A may be attached to the mating plate 51B at the end on the -Z direction side while maintaining the relative positions of the various parts in the holding jig part 1A. This allows the space between the holding jig parts 1A to be narrowed, and this allows a larger number of holding jig parts 1A to be attached to the holding jig 1, thereby further improving work efficiency.

The mating plate 51B has a through hole 52 formed therein, passing through between front and back surfaces.

The through hole 52 is circular. The circle has a diameter that allows the threaded portion 42A of the bolt 42, which is part of an arm fixing mechanism, to be inserted therethrough. The through hole 52 may not be provided with a thread and may simply be a through hole. The bolt 42 is inserted into the through hole 52. The head 42B of the bolt 42 is placed on the -Z direction side.

According to one embodiment of the present invention, the threaded portion 42A of the bolt 42, which is a screw member, is inserted through at least the base 50 (specifically, the mating flat plate 51B), the first holding mechanism 15 and the lever 90. Then, the threaded portion 42A of the bolt 42 is inserted through at least the base 50, the first holding mechanism 15, and the lever 90, and is screwed into at least one of the lever 90, the base 50, and the first holding mechanism 15. The threaded portion 42A may be further inserted through a coil spring 60 which is a biasing member.

One embodiment of the present invention shows a case where the first holding mechanism 15 is screwed into the threaded portion 42A of the bolt 42, and the bolt 42 is simply inserted through the lever 90 and the base end portion 50. The arm fixing mechanism that fixes the rotation of the first arm 10 includes, from the right side of the page (from the -Z direction to the +Z direction), a bolt 42 as a screw member with head 42B placed in the -Z direction, a shaft member 44 as a spacer, a connecting member 51 that is a part of the base 50, a pair of nuts 46A, 46B as double nuts, a lever 90, and a terminal nut 46C.

The bolt 42 includes a cylindrical threaded portion 42A having a thread formed on its outer circumferential surface, and a head 42B. A pair of nuts 46A, 46B and a terminal nut 46C are screwed into the threaded portion 42A. The nut 46B is placed inside of a through hole 90A of the lever 90.

The head 42B of the bolt 42, which is a screw member, is placed in the -Z direction. That is, according to one embodiment of the present invention, the head 42B of the screw member and the lever 90 are located at a position with the first holding mechanism 15 (specifically, the first arm 10) therebetween. According to one embodiment of the present invention, the first holding mechanism 15 is adjacent to and sandwiched between the bolt head 42B and the shaft member 44.

If the lever 90 is rotated downward when the threaded portion 42A is a right-handed thread, the terminal nut 46C and the nut 46B in the through hole 90A rotate together with the lever 90, and accordingly the nut 46A and both nuts 46A, 46B also rotate accordingly. When this happens, the bolt 42 also rotates, so that the first holding mechanism 15 (specifically, the first arm 10) moves in the +Z direction relative to the bolt 42 and is pressed against the shaft member 44 and fixed thereto.

When the lever 90 is rotated upward, the first holding mechanism 15 moves in the -Z direction relative to the bolt 42 and is pressed against the bolt head 42B (or, if there is a member placed between the bolt head 42B and the first arm 10, an adjacent member to that member), thereby fixing the first holding mechanism 15.

On the other hand, when the threaded portion 42A is a left-handed thread, by rotating the lever 90 downward, the first holding mechanism 15 is pressed against the bolt head 42B (or the adjacent member), thereby fixing the first holding mechanism 15. Further, by rotating the lever 90 upward, the first holding mechanism 15 is pressed against the adjacent shaft member 44, thereby fixing the first holding mechanism 15.

The adjacent member is not limited, and may be, for example, a nut or a spacer provided adjacent to the head 42B of the screw member.

The first arm 10 has a base end portion 10A extending laterally and a tip end portion 10B extending obliquely downward from the tip of the base end portion 10A.

The base end portion 10A is composed of a plate material parallel to the XY plane on the +X direction side of a twisted portion 10A1, and a circular screw hole 10C is formed at a position slightly on the +X direction side of the twisted portion 10A1, having a diameter capable of being screwed into the threaded portion 42A of the bolt 42. The base end portion 10A, which is a plate material parallel to the XY plane, is twisted 90 degrees at the twisted portion 10A1. As a result, the base end portion 10A is composed of a plate material parallel to the YZ plane on the -X direction side of the twisted portion 10A1. The base end portion 10A is bent in the +Y direction at a position slightly on the -X direction side of the twisted portion 10A1.

With this configuration, the first arm 10 can be moved away from the lens substrate L by pushing a plate member that extends in the +Y direction and is parallel to the YZ plane, from the +X direction to the -X direction. This means that, similarly to the lever 90, the need for the work space in the Z direction can be eliminated. That is, the operations of holding the lens substrate L, reducing the biasing force by rotating the lever 90, and removing the lens substrate L after the immersion treatment from the holding jig 1 by moving the first arm 10 away from the lens substrate L (returning the lens substrate L to its initial position before it was held) can be performed within the XY plane, thereby eliminating the need for the work space in the Z direction.

The first holding portion (first claw 12) for holding the lens substrate L is provided at the tip of the tip end portion 10B.

The first claw 12 is attached so that the base end portion 12A is attached along the surface of the tip end portion 10B of the first arm 10, and the tip end portion 12B is bent toward the lens substrate L with respect to the base end portion 12A. The edge of the tip end portion 12B, which abuts against the lens substrate L, is formed in a V-shaped concave shape.

The second arm 20 is a rod-shaped member and includes the base end portion 20A attached to the base 50 and the tip end portion 20B extending downward from the base end portion 20A.

The second arm 20 is attached by connecting the upper end of the base end portion 20A to the base body 53 with a bolt 23.

The tip end portion 20B is inclined toward the lens substrate L with respect to the base end portion 20A. A second holding portion (second claw 22) 22 for holding the lens substrate L is provided at the tip of the tip end portion 20B.

The second claw 22 is placed to face the first holding mechanism 15 (specifically, the first claw 12), with the lens substrate L to be held therebetween.

The second claw 22 is attached so that the base end portion 22A is attached along the surface of a tip end portion 20B of the second arm 20, and the tip end portion 22B is bent toward the lens substrate L with respect to the base end portion 22A. The tip edge of the tip end portion 22B, which abuts against the lens substrate L, is formed into a V-shaped concave shape.

The third holding mechanism 35 is composed of bent claws 32A and 32B that support the lens substrate L to be held from below. According to one embodiment of the present invention, this bent claw is fixed to the base body 53 and is an elongated member in the Z direction, provided with a plurality of grooves (preferably three or more) for clamping the lens substrate L to be held in the Z direction. More specifically, the third holding mechanism 35 refers to the grooves (for example, the groove 33A of the bent claw 32A) for clamping the lens substrate L.

When at least the first holding mechanism 15, the biasing member (coil spring 60), the lever 90 and the screw member (bolt 42) are considered as one set of the holding jig parts 1A, the holding jig parts 1A are provided in multiple (preferably three or more) sets arranged in the axial rotation direction. That is, when the lens substrate L is placed in each set, each lens substrate L fits into each groove of the bent claws.

As described above, the holding jig 1 according to one embodiment of the present invention employs the lever 90 as the fixing mechanism to fix the first holding mechanism 15. Therefore, an operator only needs to reach out from the +X direction of the holding jig 1 to operate the lever 90. Particularly, when three or more of the above sets are provided, the operation of a middle set cannot be performed in the Z direction due to the adjacent sets. On the other hand, when one embodiment of the present invention is employed, the operator only needs to reach out from the +X direction of the holding jig 1 to operate the lever 90, and the middle set can also be operated. The bent claws are provided in consideration of providing multiple such sets.

According to one embodiment of the present invention, the bent claws are provided in two rows arranged in the X direction for the following reasons.

The shape of the lens substrate L held by the holding jig 1 according to one embodiment of the present invention may be circular when viewed in a plan view (when viewed in the Z direction), elliptical when viewed in a plan view, or any other special shape.

As described above, when using the holding jig 1 having multiple (preferably three or more) sets of holding jig parts 1A, it is more efficient to place the lens substrates L, L' of various shapes and/or sizes in each set of holding jig parts 1A and then perform an immersion treatment to an entire holding jig 1, rather than using the lens substrates L that must all be the same shape and size.

On the other hand, when the lens substrates L of various shapes and/or sizes are placed in each set of the holding jig parts 1A, the position of the center of gravity of each of the placed lens substrates L in the X direction differs for each lens substrate L.

For example, in the case of the lens substrate L' having an elliptical shape in plan view with its major axis in the Y direction, even when the bent claw (type 1) 32A is provided so that the groove 33A is located directly under the center of gravity of the lens substrate L that is circular in plan view, the center of gravity of the lens substrate L is located at a position in the -X direction from the groove 33A of the bent claw (type 1) 32A.

In this case, the elliptical lens substrate L' cannot be stably held by the bent claw 32A. Therefore, it is preferable to provide another bent claw (type 2) 32B so that the groove is located directly under the center of gravity of the elliptical lens substrate L.

However, it is preferable that the center position of the groove 33A of the bent claw (type 1) and the center position of the groove (not illustrated) of the bent claw (type 2) are equivalent in the Z direction (for example, an error of 3 mm or 1 mm). With this configuration, no matter what shape and/or size of the lens substrates L, L' are placed on whichever set of the holding jig parts 1A, it is sufficient that the lens substrates L, L' are held by either the bent claw (type 1) 32A or the bent claw (type 2) 32B, and even when the lens substrates L, L' having different positions of the center of gravity in the X direction are mixed, they can be held by a single holding jig 1.

The above description is summarized as follows: the third holding mechanism 35 is preferably a plurality of elongated members arranged in a horizontal direction in a plane including the rotation direction, and the center position of the groove in the axial rotation direction is preferably the same in each of the elongated members.

As described above, in this specification, although the lens substrate L has been described primarily as being circular, the scope of application of the present invention is not limited thereto. Using the holding jig 1 according to one embodiment of the present invention, an irregularly shaped lens substrate L' (elliptical or other shape) can be held by the holding jig 1 in the same manner and at the same time. When holding the lens substrate L having a shape other than a circle, it is advisable to hold it so that the major axis direction (the direction along which the lens has a maximum dimension) is vertical. The effect of the present invention is remarkably obtained in a lens of a plus prescription, which has a relatively small edge thickness and is susceptible to deformation and damage near the outer periphery where it is held.

When the optical element held by the holding jig 1 according to one embodiment of the present invention is the lens substrate L, the effect of employing the configuration described in the above paragraph is particularly greater for a lens having a positive power (plus lens) than for a lens having a negative power (minus lens).

In the plus lens, the thickness of the lens edge (edge) tends to be small, and deformation due to heat tends to occur. Also, in the plus lens, an irregularly shaped lens (the lens in which the edge of a circular uncut lens is damaged by polishing a lens surface to obtain a specified design value, and the lens becomes irregularly shaped such as an oval by the time the hard coat film of the present application is formed) is mixed in and is prone to falling off.

On the other hand, by using the holding jig 1 according to one embodiment of the present invention, thermal deformation and falling of the lens can be reliably prevented, and both productivity and yield can be maintained high.

The third holding mechanism 35 is not limited to the bent claw. The third holding mechanism 35 may be an elongated member fixed to a base and elongated in the axial rotation direction, and provided with a plurality of grooves for clamping the lens substrate L to be held in the axial rotation direction, and the elongated member may be a plate-like member whose shape when viewed from the +X direction to the -X direction is at least one of a bent line or a curve.

What is illustrated in this specification is the plate-like member that is elongated in the Z direction and has a zigzag-shaped bent line when viewed from the +X direction to the -X direction. In the holding jig 1 according to one embodiment of the present invention, the lens substrate L is held at a valley portion of the zigzag. With this configuration, when the lens substrate L is pulled up from the coating liquid, many starting points for dripping of excess coating liquid can be created. This can promote the dripping of the coating liquid, and eventually promote the recovery of excess coating liquid that flows down from the lens substrate L. The coating liquid for the hard coat is highly viscous and expensive. Therefore, it is preferable to return it to a soaking tank promptly. The third holding mechanism 35 according to one embodiment of the present invention can achieve this effect, thereby further improving the working efficiency.

The holding jig 1 according to one embodiment of the present invention further includes a shaft member 44 serving as a spacer between the first holding mechanism 15 and the base.

The shaft member 44 serving as a spacer is composed of a cylindrical resin member such as plastic. A material constituting the shaft member 44 is preferably a material that generates a large frictional resistance against the first arm 10 when pressure is added from the first arm 10.

The shaft member 44 has a through hole 44A formed therethrough. An outer diameter of the shaft member 44 is slightly smaller than an inner diameter of the coil spring 60. That is, the shaft member 44 is sized so as to be able to be housed in a spiral portion 62 of the coil spring 60.

In summary, in the arm fixing mechanism according to one embodiment of the present invention, the threaded portion 42A of the bolt 42 is inserted through the screw hole 10C of the first arm 10, the through hole 44A of the shaft member 44, the spiral portion 62 of the coil spring 60, the through hole 52 of the mating plate 51B constituting the connecting member 51 which is a part of the base 50, the pair of nuts 46A, 46B, and the through hole 90A of the lever 90, in this order. Then, a terminal nut is tightened onto the tip of the threaded portion 42A from the +Z direction.

With this configuration, according to one embodiment of the present invention, when the threaded portion 42A is a right-handed thread and before the lever 90 rotates, the first arm 10 is capable of rotating relative to the base 50 around the threaded portion 42A of the bolt 42. Then, by rotating the lever 90 and also rotating the nuts 46A and 46B, the first arm 10 moves slightly in the +Z direction relative to the bolt 42. Then, the first arm 10 is pressed against the shaft member 44. As a result, the frictional force between the first arm 10 and the shaft member 44 increases. Finally, the rotation of the first arm 10 is restricted, and the first arm 10 can be fixed to the base 50.

That is, the shaft member 44 as a spacer comes into direct contact with the first holding mechanism 15 (specifically, the first arm 10) when the lever 90 is rotated, and serves as a member to be pressed against.

The coil spring 60 includes a spiral portion 62 formed in a spiral shape, and a first end 64 and a second end 66 extending from the ends of the spiral portion 62. The coil spring 60 is attached around the shaft member 44 by inserting the shaft member 44 into the inside of the spiral portion 62. The tip of the first end 64 is bent in a direction away from the spiral portion 62, and the tip of the second end 66 is bent in a direction away from the spiral portion 62.

The tip of the first end 64 of the coil spring 60 is hooked onto the base connecting flat plate 51A, and the tip of the second end 66 is hooked onto an upper edge of the first arm 10. The coil spring 60 is attached in a pre-twisted state between the first end 64 and the second end 66. Thereby, the coil spring 60 biases the first arm 10 so that the first claw 12 rotates toward the second arm 20.

In order to hold the lens substrate L using the holding jig 1, for example, the following operations are performed.

First, the first arm 10 is manually pulled to apply tension to the side and rotated away from the second arm 20. Then, in this state, the lens substrate L is placed in the space surrounded by the first claw 12, the second claw 22, and the third claws 32A and 32B. Then, the hand is released from the first arm 10, and the tension on the first arm 10 is released.

Thereby, the first claw 12 of the first claws 12, the second claw 22 of the second claws 22, and the third claws 32A, 32B (grooves in one of the multiple bent claws) each abuts against the side of the lens substrate L, and the lens substrate L is held at three points.

Next, the lever 90 of the arm fixing mechanism is rotated. Thereby, the rotation of the first arm 10 is fixed and the first claw 12, the second claw 22, and the third claws 32A and 32B are in contact with the sides of the lens substrate L, and in this state, the lens substrate L is held with substantially no biasing force added thereon.

At this time, it is preferable that a position where the first claw 12 and the second claw 22 hold the lens substrate L is such that a distance l1 in a height direction from the center of gravity of the lens substrate L is 0.3 times or less of a diameter of the lens substrate L (the major axis when the lens substrate L is elliptical).

Further, a position where the third claws 32A, 32B hold the lens substrate L is preferably such that a horizontal distance l2 from the center of gravity of the lens substrate L is 0.15 times or less of a diameter or a major axis R of the lens substrate L in the horizontal direction.

By holding the lens substrate L at the position as shown in the above paragraph, the lens substrate L is held stably. Further, when the lens substrate L is pulled up from the coating liquid in the step described below, excess coating liquid remaining in the lens holding mechanism can be prevented from crossing the optical surface of the lens substrate L due to gravity, thereby preventing unevenness in a film thickness.

As for the biasing force of the coil spring 60 added on the first arm 10, it is preferable to adjust it in accordance with the size and shape of the lens substrate L so that the force with which the first claw 12 presses against the lens substrate L during attachment of the lens substrate L is about 0.1 to 1 N. When the pressing force is 1N or less, a large force is not required to attach the lens substrate L, which is preferable. When the pressing force is 0.1 N or more, the stability of an attachment work is improved. In the both cases of 0.1 N or more and 1N or less, it is positive in terms of workability.

Then, the biasing force of the spring is restricted by rotating the lever after the lens substrate L is attached. Due to this restriction, the biasing force or pressing force substantially added on the lens substrate L is reduced to substantially zero. "Substantially zero" refers to less than 0.5N, and preferably less than 0.1N. When the value is less than a quantitative lower limit when measuring the biasing force or pressing force, it may be considered to be substantially zero.

Although there is no limit in a range of rotation of the lever 90, it is preferable to set the range of rotation so that an operator can easily fix the first arm 10 with just one finger. Specifically, in order to enable the lever 90 to be operated simply by moving a fingertip from top to bottom, when the +Y direction on the XY plane is a rotation angle of 0 degrees and the +X direction is a rotation angle of 90 degrees, the movable range may be at least a rotation angle of 0 to 160 degrees. The initial position θ1 (FIG. 4) of the lever 90 before the first arm 10 is fixed may be set to a position within a range of 30 to 90 degrees.

In this case, while the first holding mechanism 15 is fixed by rotating the lever 90 in the same direction (downward) as the rotation direction of the first arm 10, the lever 90 may be rotated in the opposite direction (upward) (for example, to a rotation angle of 0 degrees). Specifically, the following actions may be taken. The lever 90 is rotated from an initial position of a rotation angle of 60 degrees (θ1) to a rotation angle of 160 degrees (θ2) to fix the first holding mechanism 15. On the other hand, the holding jig 1 may be configured so that the first holding mechanism 15 can be fixed in a state where the first arm 10 is pulled up nearly horizontal and the lever 90 is rotated to a rotation angle of 0 degrees (upward, in the opposite direction).

### <Method for manufacturing a spectacle lens, etc.>

A depositing method for the lens substrate L using the above-described holding jig 1 and a method for manufacturing a spectacle lens will be described below.

The outline of a method for manufacturing a spectacle lens according to one embodiment of the present invention is as follows.

"A method for manufacturing an optical element, for depositing a film on an optical element while the optical element (lens substrate L) is held by a holding jig 1 according to one embodiment of the present invention, the method including:
an optical element holding step of placing an optical element in the holding jig 1, and holding a peripheral edge of the optical element with a plurality of holding mechanisms while biasing a first holding mechanism 15 so as to rotate toward a side surface of the optical element;
a first holding mechanism fixing step of fixing the first holding mechanism 15 by rotating the lever 90, after the optical element holding step;
an immersion step of immersing the optical element together with the holding jig 1 in a coating liquid, after the first holding mechanism fixing step;
a pulling up step of pulling up the optical element together with the holding jig 1 from the coating liquid; and
a curing step of heating and curing the coating liquid applied to the optical element."

The spectacle lens to be manufactured may be various lenses such as a single-focus lens, multifocal lens, and progressive power lens. The type of the lens is determined by the surface shapes of both surfaces of the lens substrate L. Further, the surface of the lens substrate L may be any of a convex surface, a concave surface, and a flat surface. In a typical lens substrate L and spectacle lens, an object side surface is a convex surface and an eyeball side surface is a concave surface, although this is not limited thereto.

The lens substrate L is preferably a plastic lens substrate L. Examples of the resin used for the plastic lens substrate L include: styrene resins such as (meth)acrylic resins, polycarbonate resins, allyl resins, and allyl carbonate resins such as diethylene glycol bisallyl carbonate resin (CR-39), vinyl resin, polyester resin, polyether resin, urethane resin obtained by reacting an isocyanate compound with a hydroxy compound such as diethylene glycol, a thiourethane resin obtained by reacting an isocyanate compound with a polythiol compound; and a cured product (generally called transparent resin) obtained by curing a curable composition containing a (thio)epoxy compound having one or more disulfide bonds in a molecule.

Further, the refractive index of the lens substrate L can be, for example, about 1.48 to 1.75.

Hereinafter, the deposition of a hard coat film on the lens substrate L will be described as an example, with reference to FIG. 5.

The lens substrate L, which is the material for the optical lens for a spectacle, is subjected to cutting, polishing and cleaning in advance as a semi-finished lens in order to form it into a shape corresponding to a prescription for a user. The lens substrate L to which the present invention is applied, may be a semi-finished lens, or may be a lens substrate L in which optical surfaces on the eyeball side and the object side are formed based on a prescription for a user.

First, as illustrated in FIG. 5, the lens substrate L is attached to the holding jig 1 (S20). The lens substrate L is attached to the holding jig 1 in the following manner.

First, the first arm 10 is pulled to apply tension thereon and rotated in a direction away from the second arm 20 to provide a space between the first claw 12 and the second claw 22 and the third claw, i.e., the bent claws 32A and 32B (S21).

Next, in this manner, with the first arm 10 away from the second arm 20 and the third claws, i.e., the bent claws 32A and 32B, the lens substrate L is placed so that it is surrounded by the first claw 12, the second claw 22, and the bent claws 32A and 32B (S22). When the first arm 10 is biased toward the edge of the lens substrate L to be held, the first arm 10 is pulled as described above against the biasing force to move the first arm 10 away from the second arm and the third arm.

Next, the tension on the first arm 10 is released. Thereby, the first arm 10 is rotated by the biasing force of the coil spring 60 in a direction approaching the second arm 20 and the two rows of bent claws 32A, 32B, and the first claw 12 presses the lens substrate L. Then, the first claw 12, the second claw 22 and the bent claw 32A or 32B which is the third claw abut against the peripheral edge of the lens substrate L (S23) (optical element holding step).

The peripheral edge of the lens substrate L refers to the edge of the lens substrate L in a plan view, mainly the side surface LS. Each of the claws according to one embodiment of the present invention abuts against a corner between the side surface LS of the lens substrate L and the two main surfaces. However, when the corner of the lens substrate L is chamfered, there may be a small amount of contact between both main surfaces. On the other hand, in the case of only a small amount of contact as described above, no external force is substantially added on the lens substrate L, and deformation or damage of the lens substrate L can be prevented. An example of the very small portion refers to a range of 1 mm, more preferably 0.5 mm, inward from the edge of the lens substrate L in a plan view.

Then, the lever 90 of the arm fixing mechanism is rotated downward. Thereby, the first arm 10 moves slightly in the +Z direction relative to the bolt 42, and as a result, the first arm 10 is pressed against the shaft member 44, and the rotation of the first arm 10 is fixed by the friction associated with the pressing (S24) (first holding mechanism fixing step). By these steps S21 to S24, the lens substrate L can be held by the holding jig 1. In this state, the lens substrate L is stably held so that its optical surface extends substantially vertically, and substantially no biasing force from the coil spring 60 is acting on its peripheral edge. That is, the first holding mechanism 15 is fixed at a position where the first to third holding mechanisms 35 abut against the edge of the lens substrate L in the held state, thereby essentially eliminating the biasing force pressing against the lens substrate L.

Next, a hard coat film is deposited on the lens substrate L (S30). The hard coat film is deposited on the lens substrate L as follows.

First, the holding jig 1 is lowered, and the lens substrate L together with the holding jig 1 is immersed in a coating liquid containing a silicone compound as a main component used for forming a hard coat film (S31) (immersion step).

Next, the lens substrate L is raised together with the holding jig 1, to pull up the lens substrate L from the coating liquid (S32) (pulling up step). By pulling up the lens substrate L from the coating liquid in this manner, excess coating liquid is removed from the optical surface of the lens substrate L by gravity.

Next, the holding jig 1 is subjected to a heat treatment at 80 to 120°C. The holding jig 1 is subjected to the heat treatment, whereby the coating liquid applied to the surface of the lens substrate L is heat-cured (S33) (curing step). At this time, in the holding jig 1 according to one embodiment of the present invention, since substantially no external force (biasing force for holding the lens) is added on the lens substrate L, deformation or damage of the lens substrate L can be prevented.

Then, immersion in the coating liquid (S31), pulling up from the coating liquid (S32), and heating and curing (S33) are repeated until the hard coat film of a predetermined thickness is formed on the optical surface of the lens substrate L. By repeating S31 to S33, the hard coat film can be formed. In order to form the hard coat film of a predetermined thickness, steps S31 to S33 may be repeated as necessary.

When depositing the hard coat film on the lens substrate L (S30), a primer layer may be formed on the surface of the lens substrate L first. The primer layer is intended to ensure an impact resistance of the lens substrate L and to ensure adhesion between the hard coat film and the lens substrate L. When the lens substrate L is composed of a material with a relatively high refractive index, the primer layer may be composed of a material that does not affect the optical characteristics. Such a primer layer can be formed by coating using a dipping method, a spin coating method, a spraying method, etc., followed by curing by heating or irradiation with light, etc.

Through the above steps, the hard coat film can be formed on the lens substrate L. The use of the holding jig 1 according to one embodiment of the present invention may end here. There is no limitation in the step after the deposition of the hard coat film. For example, after the lens substrate L is removed from the holding jig 1, an anti-reflection film may be formed on the surface of the hard coat film of the lens substrate L (S40). The anti-reflection film can be formed using, for example, a vacuum deposition method, a dipping method, a spin coating method, etc.

Through the above steps, the spectacle lens can be manufactured.

### <Effects obtained by one embodiment of the present invention>

According to one embodiment of the present invention, the following effects are exhibited.

In the holding jig 1 according to one embodiment of the present invention, the lever 90 is employed as a fixing mechanism for the first holding mechanism 15. Therefore, an operator only needs to reach out from the +X direction of the holding jig 1 to operate the lever 90. Further, the operator does not need to point his/her whole hand toward the lever 90, but can operate the lever 90 with just one finger, thereby improving work efficiency.

As a result, there is no longer a need to ensure a large space between the holding jigs 1 as in the case of using a wing bolt, and there is also no need to reduce the number of holding jigs 1 used for the deposition treatment that can be performed collectively, thereby improving work efficiency.

In the holding jig 1 according to one embodiment of the present invention, the lever 90 is employed as a fixing mechanism to fix the first holding mechanism 15. Therefore, an operator only needs to reach out from the +X direction of the holding jig 1 to operate the lever 90. Particularly, when three or more of the above sets are provided, the operation of the middle set cannot be performed in the Z direction due to the adjacent sets. On the other hand, when one embodiment of the present invention is employed, the operator only needs to reach out from the +X direction of the holding jig 1 to operate the lever 90. In addition, the middle set can also be operated.

When using the holding jig 1 having a plurality of (preferably three or more) sets of holding jig parts 1A, it is more efficient to place the lens substrates L of various shapes and/or sizes in each set of holding jig parts 1A and then perform the immersion treatment to an entire holding jig 1. Therefore, it is preferable to provide another bent claw (type 2) so that the groove is located directly under the center of gravity of the elliptical lens substrate L.

In this case, it is preferable that the center position of the groove 33A of the bent claw (type 1) and the center position of the groove (not illustrated) of the bent claw (type 2) are the same in the Z direction. With this configuration, no matter what shape and/or size of the lens substrate L is placed on whichever set of the holding jig parts 1A, it is sufficient to hold the lens substrate L by either the bent claw (type 1) or the bent claw (type 2), thereby increasing the number of types of the lens substrate L that can be followed.

In addition, according to one embodiment of the present invention, since the first claw 12 is attached to the first arm 10 rotatably provided on the base, the lens substrates L of different sizes and shapes can be held by rotating the first arm 10. Further, after the lens substrate L is placed in a fixed position by the first to third holding mechanisms 35, by fastening the bolt 42 constituting the arm fixing mechanism with the nuts 46A and 46B, the rotation of the first arm 10 is fixed, and the lens substrate L is stably held without any external force being added thereon. Accordingly, even when the lens substrate L is subjected to a heat treatment such as heat curing applied to a coating material, the lens substrate L can be prevented from being deformed or damaged by the external force.

Further, according to one embodiment of the present invention, the arm fixing mechanism fixes the first arm 10 by tightening the bolt 42 using the nuts 46A, 46B and placing the first arm 10 using the bolt 42 and the nuts 46A, 46B with the shaft member 44 interposed therebetween and pressing the first arm 10 against any adjacent member. This allows the operator performing the deposition treatment on the lens substrate L to easily and quickly fix and release the first arm 10.

Further, according to one embodiment of the present invention, the second claw 22 is attached to the second arm 20. This allows the second claw 22 to be flexibly held, and the force added on the lens substrate L can be reduced.

### <Other>

The technical scope of the present invention is not limited to one embodiment of the present invention, but also includes forms in which various modifications and improvements are made within the scope in which specific effects can be obtained by the constituent elements of the invention or combinations thereof.

One embodiment of the present invention shows a case where the hard coat film is formed on the surface of the lens substrate L, but the present invention is not limited thereto, and a blue light cut film that reduces glare and improves visibility and contrast by cutting light in the blue region (wavelength range of 380 to 500 nm), or an anti-reflection film containing, for example, silicon oxide, titanium dioxide, zirconium oxide, tantalum oxide, etc., or a water-repellent film that uses an organosilicon compound having fluorine atoms to improve water repellency, may be formed. Further, in the holding jig 1 according to one aspect of the present invention, deformation and damage of the lens substrate L can be prevented even when the lens substrate L is subjected to an annealing treatment.

According to one embodiment of the present invention, the lens substrate L is held by the first claw 12, the second claw 22, and the third claw that is the bent claw 32A or 32B, but the lens substrate L may be held by four or more claws. Further, according to one embodiment of the present invention, the second claw 22 and the bent claw 32A or 32B that is the third claw are fixed, but these may also be movable.

Conversely, the lens substrate L may be held by two claws (two holding mechanisms). For example, the second holding mechanism 25 (second claw 22) and the third holding mechanism 35 (bent claws 32A, 32B which are the third claws) may be integrated, while the first holding mechanism 15 stays as it is as described above. For example, a metal rod may be extended from the bent claw, which is the third holding mechanism 35, into the shape of a square bracket " 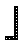 " and connected to the base body 53, and the second claw 22 may be provided on this square bracket portion. However, since holding the optical element at three points provides stable holding, it is preferable to provide at least three portions (eg, claws) that come into contact with the optical element, as shown in one embodiment of the present invention.

One embodiment of the present invention shows a case where the bolt 42 is inserted through the spiral portion 62 of the coil spring 60. However, when a biasing member other than the coil spring 60 is employed, the bolt 42 does not need to be inserted through the biasing member.

The through hole 90A of the lever 90 may be screwed into the threaded portion 42A of the bolt 42. Even in this case, according to one embodiment of the present invention, when the lever 90 is rotated downward, the lever 90 itself moves slightly in the +Z direction relative to the bolt 42. As a result, the first holding mechanism 15 is pressed against the shaft member 44 to fix the first holding mechanism 15.

One embodiment of the present invention shows a case where one set of holding jig parts 1A is provided with one lever 90, but the present invention is not limited to this embodiment. For example only one common lever 90 may be provided in the holding jig. With this configuration, the first holding mechanisms 15 of the holding jig parts 1A can be fixed simultaneously by operating only one lever 90, without having to operate the lever 90 of each holding jig part 1A one by one. Also, the holding jig 1 may be provided with a mechanism for simultaneously operating each lever 90, while one set of holding jig parts 1A may be provided with one lever 90.

According to one embodiment of the present invention, a stationary holding jig 1 is employed. On the other hand, as described in Patent document 1, the present invention is also applicable to the holding jig 1 that enables hanging.

The holding jig 1 according to one embodiment of the present invention is not limited to arranging multiple sets of holding jig parts 1A. Indeed, the holding jig 1 according to one embodiment of the present invention has the effect of preventing a deterioration in work efficiency due to a narrow space between adjacent holding jig parts 1A that arises when the multiple holding jig parts 1A are provided. On the other hand, even in the holding jig 1 having only one holding jig part 1A, the work efficiency of the deposition treatment is improved, in view of the point that the rotation of the first arm 10 can be fixed with just a fingertip.

### Description of sings and numerals

1: Holding jig
1A: Holding jig parts (set)
10: First arm
10A: Base end portion
10A1: Twisted portion
10B: Tip end portion
10C: Screw hole
12: First claw
12A: Base end portion
12B: Tip end portion
15: First holding mechanism
20: Second arm
20A: Base end portion
20B: Tip end portion
22: Second claw
22A: Base end portion
22B: Tip end portion
23: Bolt
25: Second holding mechanism
32A: Bending claw (part 1)
32B: Bending claw (part 2)
33A: Groove in bending claw (part 1)
35: Third holding mechanism
42: Bolt
42A: Threaded portion
42B: Head
44: Shaft member
44A: Through hole
46A: Double nut (part 1)
46B: Double nut (part 2)
46C: Terminal nut 50: Base
51: Connecting member
51A: Base connecting flat plate
51A1: Screw hole
51A2: Screw hole
51B: Flat plate for fitting
52: Through hole
53: Base
54: Square rod
55: Bolt
60: Coil spring
62: Spiral portion
64: First end
66: Second end
90: Lever
90A: Through hole
XY1: Plane including the rotation direction of the first arm (XY plane)
XY2: Plane parallel to the plane including the rotation direction of the first arm (XY plane)

## Claims

1. A holding jig, which is a holding jig for holding an optical element, comprising:
a base;
a plurality of holding mechanisms that hold a peripheral edge of the optical element;
a biasing member that biases a first holding mechanism among the plurality of holding mechanisms so that the first holding mechanism rotates toward a side surface of the optical element to be held; and
a lever that can be rotated in a direction parallel to a plane including a rotation direction of the first holding mechanism,
wherein the lever is rotated to fix the first holding mechanism, thereby reducing a biasing force added on the optical element by the biasing member.

2. The holding jig according to claim 1, further comprising:
a screw member inserted through at least the base, the first holding mechanism, and the lever, and that is screwed into at least any of the lever, the base, and the first holding mechanism,
wherein by rotating the lever, the first holding mechanism moves relative to the screw member in either direction in an axial rotation direction, and is pressed against a member adjacent to the holding mechanism and fixed.

3. The holding jig according to claim 2,
wherein when at least the first holding mechanism, the biasing member, the lever and the screw member are defined as one set, the set is provided as multiple sets arranged in the axial rotation direction.

4. The holding jig according to claim 1,
wherein the plurality of holding mechanisms include:
a second holding mechanism placed to face the first holding mechanism with the optical element to be held therebetween; and
a third holding mechanism that supports the optical element to be held from below.

5. The holding jig of according to claim 4,
wherein the second holding mechanism is fixed to the base.

6. The holding jig according to claim 4,
wherein the third holding mechanism is a member fixed to the base and elongated in the axial rotation direction, and is an elongated member provided with a plurality of grooves for clamping the optical element to be held in the axial rotation direction.

7. The holding jig according to claim 6,
wherein the third holding mechanism is a plurality of the elongated members arranged in a horizontal direction within a plane including the rotation direction, and a center position of the groove in the axial rotation direction is the same for each elongated member.

8. The holding jig according to claim 6,
wherein the elongated member is a plate-like member whose shape when viewed from a horizontal direction in a plane including the rotation direction is at least one of a bent line or a curve.

9. The holding jig according to claim 2,
wherein a head of the screw member and the lever are located at positions sandwiching the first holding mechanism, and by rotating the lever, the first holding mechanism moves relative to the screw member in either direction in the axial rotation direction, and a pressing destination when the first holding mechanism is pressed, is the head of the screw member, or a member inserted through the screw member and is placed on either side of the first holding mechanism.

10. The holding jig according to claim 9,
wherein the biasing member is a coil spring,
the screw member is further inserted through the biasing member, and the head of the screw member, the first holding mechanism, the biasing member, the base, and the lever are arranged in this order in the axial rotation direction.

11. The holding jig according to claim 10, further comprising:
a spacer between the first holding mechanism and the base,
wherein the spacer has a size that can be accommodated in a spiral portion of the coil spring, and the spacer comes into direct contact with the first holding mechanism when the lever is rotated, to thereby fix the first holding mechanism.

12. The holding jig according to claim 2,
wherein the lever is rotated in the same direction as a direction in which the first holding mechanism rotates toward a side surface of the optical element, to thereby fix the first holding mechanism, and
the lever is rotated in a direction opposite to a direction in which the first holding mechanism rotates toward the side surface of the optical element, to thereby fix the first holding mechanism while rotating the first holding mechanism in the opposite direction.

13. A method for manufacturing an optical element, for depositing a film on an optical element while holding the optical element using the holding jig according to any one of claims 1 to 12, the method comprising:
an optical element holding step of placing the optical element in the holding jig, and holding a peripheral edge of the optical element with the plurality of holding mechanisms while biasing the first holding mechanism so as to rotate toward a side surface of the optical element;
a first holding mechanism fixing step of fixing the first holding mechanism by rotating the lever after the optical element holding step;
an immersion step of immersing the optical element together with the holding jig in a coating liquid after the first holding mechanism fixing step;
a pulling up step of pulling up the optical element together with the holding jig from the coating liquid; and
a curing step of heating and curing the coating liquid applied to the optical element.
